# EUROPÄISCHE PATENTSCHRIFT

(11) **EP 1 371 060 B1**
(45) Veröffentlichungstag und Bekanntmachung des Hinweises auf die Patenterteilung: **23.02.2005**
(21) Anmeldenummer: 02708338.5
(22) Anmeldetag: 01.03.2002
(51) Int. Cl.: G11B 7/26, B29C 65/48

(54) **VORRICHTUNG ZUM ZUSAMMENFÜGEN VON SUBSTRATEN**
DEVICE FOR JOINING SUBSTRATES
DISPOSITIF D'ASSEMBLAGE DE SUBSTRATS

(30) Priorität: 21.03.2001 DE 10113833
(43) Veröffentlichungstag der Anmeldung: 17.12.2003
(73) Patentinhaber: Steag HamaTech AG, 75447 Sternenfels (DE)
(72) Erfinder: HUPP, Alexander, 75056 Sulzfeld (DE); SPEER, Ulrich, 75239 Eisingen (DE); WAGNER, Roland, 75447 Sternenfels (DE); MICHELS, Frank, 75438 Knittlingen (DE)
(74) Vertreter: Wagner & Geyer
(86) Internationale Anmeldenummer: PCT/EP2002/002213
(87) Internationale Veröffentlichungsnummer: WO 2002/077985

(56) Entgegenhaltungen:
- EP-A- 1 172 812
- DE-A- 19 801 456
- DE-U- 20 019 557
- US-A- 2 423 965
- PATENT ABSTRACTS OF JAPAN vol. 011, no. 342 (P-635), 10. November 1987 (1987-11-10) & JP 62 124629 A (MATSUSHITA ELECTRIC IND CO LTD), 5. Juni 1987 (1987-06-05)
- PATENT ABSTRACTS OF JAPAN vol. 012, no. 408 (P-778), 28. Oktober 1988 (1988-10-28) & JP 63 146265 A (TOKYO ELECTRON LTD), 18. Juni 1988 (1988-06-18)
- PATENT ABSTRACTS OF JAPAN vol. 2000, no. 01, 31. Januar 2000 (2000-01-31) & JP 11 273165 A (DAINIPPON INK &CHEM INC), 8. Oktober 1999 (1999-10-08)
- PATENT ABSTRACTS OF JAPAN vol. 013, no. 178 (M-819), 26. April 1989 (1989-04-26) & JP 01 011038 A (FUARUKOA KK), 13. Januar 1989 (1989-01-13)

## Beschreibung

Die vorliegende Erfindung bezieht sich auf eine Vorrichtung zum Zusammenfügen von ein Innenloch aufweisenden Substraten zu einer Substratscheibe mit einem aufweitbaren Element, das in das Innenloch von wenigstens zwei übereinanderliegenden Substraten einführbar ist.

Eine derartige Vorrichtung für das Zusammenfügen von Scheiben zu einer CD oder DVD ist beispielsweise aus der US-A-4,877,475 bekannt. Bei dieser bekannten Vorrichtung ist ein Zentrierstift vorgesehen, der vor dem Zusammenfügen der Substrate in das jeweilige Innenloch der Substrate eingeführt wird, um diese zueinander zu zentrieren. Während des Zusammenfügens werden die Substrate gedreht, um ein dazwischen befindliches Klebematerial gleichmäßig zu verteilen. Um einen Schlupf zwischen den Substraten zu verhindern, was den Zusammenfügvorgang beeinträchtigen könnte, müssen die Substrate synchron gedreht werden. Dies wird bei der bekannten Vorrichtung über eine kraftflüssige Verbindung zwischen den Substraten erreicht, indem die Substrate so stark gegeneinander gedrückt werden, dass sie sich gemeinsam drehen.

Durch dieses Zusammendrücken der Substrate ergibt sich jedoch das Problem, dass die Substrate schon vor einer gleichmäßigen Verteilung des Klebers dazwischen in Kontakt gebracht werden müssen, was die Verteilung des Klebers beeinträchtigt. Darüber hinaus müssen alle mechanischen Komponenten der Vorrichtung so fest ausgeführt werden, dass sie der mechanischen Belastung beim Zusammendrücken widerstehen, was zu hohen Kosten der Vorrichtung führt. Ferner besteht die Gefahr, dass Luft über die jeweiligen Innenlöcher in den zwischen den Substraten gebildeten Spalt eindringt, wodurch sich Blasen am Innenrand des Klebers ergeben können.

Aus der DE-A-19 801 456 ist eine Vorrichtung zum Greifen, Zentrieren und Halten von Substraten mit einem Mittelloch bekannt, bei dem ein aufweitbares Spannelement durch mechanisches Quetschen zwischen einem Hubelement und einer Aufnahme zum schonenden Greifen eines einzelnen Substrats in Kontakt mit dem Mittelloch eines Substrats aufgeweitet wird.

Aus der EP 0 833 315 A ist ferner eine Vorrichtung zum Zusammenfügen von ein Innenloch aufweisenden Substraten zu einer Substratscheibe mit einem aufweitbaren Element, das in das Innenloch von wenigstens zwei übereinander liegenden Substraten einführbaren ist, bekannt.

Ausgehend von der bekannten Vorrichtung liegt der vorliegenden Erfindung daher die Aufgabe zugrunde, eine Vorrichtung zum Zusammenfügen von ein Innenloch aufweisenden Substraten zu einer Substratscheibe zu schaffen, die auf einfache und kostengünstige Weise eine gleichzeitige Drehung beider Substrate während des Verklebevorgangs gewährleistet.

Gemäß der Erfindung ist eine Vorrichtung nach Anspruch 1 vorgesehen, bevorzugte Ausführungen der Erfindung ergeben sich aus den untergeordneten Ansprüchen.

Erfindungsgemäß wird diese Aufgabe bei einer Vorrichtung der eingangs genannten Art dadurch gelöst, dass das in das Innenloch der Substrate einführbare Element derart aufweitbar ist, dass es in Kontakt mit den Innenlöchern beider Substrate kommt und einen zwischen den Substraten gebildeten Zwischenraum zur Umgebung hin abschließt. Durch Aufweiten des Elements kommt dieses mit den Innenlöchern der Substrate in Kontakt und ermöglicht eine gleichzeitige Übertragung einer Drehbewegung des Elements auf beide Substrate, sodass diese synchron zueinander gedreht werden. Die Substrate sind gegen Schlupf gesichert, sodass ein ordnungsgemäßes Zusammenfügen der Substrate gewährleistet wird. Gleichzeitig wird der zwischen den Substraten gebildete Zwischenraum vom Innenloch her verschlossen, wodurch der Eintritt von Luft in diesen Bereich verhindert wird. Hierdurch werden Ausschleudereffekte des zwischen den Substraten befindlichen Klebers sowie Blasen am Innenrand des Klebers verhindert.

Gemäß einer besonders bevorzugten Ausführungsform der Erfindung besteht das Element aus einem elastischen Material, um wiederholt eingesetzt werden zu können, und um sich an den Innenumfang der Innenlöcher der Substrate anpassen zu können. Vorzugsweise ist das Element durch Druckausübung aufweitbar.

Bei einer bevorzugten Ausführungsform der Erfindung ist das Element zwischen zwei zueinander beweglichen Teilen zusammendrückbar, um eine radiale Ausdehnung des Elements in Kontakt mit dem Innenumfang der Innenlöcher der Substrate zu erreichen. Dabei ist vorzugsweise ein Teil eine Substratauflage, die um eine Achse senkrecht zur Auflagefläche drehbar ist. Die drehbare Substratauflage, auf der eines der beiden Substrate aufliegt, verringert die Kräfte, die zur Drehung der Substrate über das Element übertragen werden, da eine Kraftübertragung zur Drehbewegung auch über die Auflagefläche erfolgt. Vorzugsweise ist der andere Teil ein Zentrierstift, der drehbar mit der Auflage gekoppelt und in Richtung der Drehachse relativ zur Auflage bewegbar ist, um das aufweitbare Element zusammendrücken zu können.

Gemäß einer bevorzugten Ausführungsform der Erfindung ist das Element ein elastischer Ring, der radial zum Schließen eines Zwischenraums zwischen den Substraten aufweitbar ist. Um eine gute radiale Aufweitung des Elements zu gewährleisten, weist wenigstens einer der Teile vorzugsweise einen sich konisch erweiternden Abschnitt auf, der zur Aufweitung des Rings in ein Mittelloch desselben einführbar ist. Vorzugsweise erstreckt sich der Zentrierstift durch ein Mittelloch des Rings, um den Ring zu fixieren und eine Kopplung des Zentrierstifts mit der Auflage zu ermöglichen.

Gemäß einer alternativen Ausführungsform der Erfindung ist das Element eine elastische, mit Druck beaufschlagbare Kammer, um eine pneumatische oder hydraulische Aufweitung des Elements zu ermöglichen. Gemäß einer Ausführungsform der Erfindung besitzt die Kammerwand einen kleineren Außenumfang als der Innenumfang des Innenfochs der Substrate, wenn der Kammerdruck auf Umgebungsdruck liegt. Durch Anlegen eines Druckmediums kann die Kammer aufgeweitet werden, wenn sich das Element in den Innenlöchern der Substrate befindet. Bei einer alternativen Ausführungsform weist die Kammerwand einen größeren Außenumfang als der Innenumfang des Innenlochs der Substrate auf, wenn der Kammerdruck auf Umgebungsdruck liegt. Um das Element in das Innenloch der Substrate einzuführen, wird die Kammer zunächst mit einem Unterdruck beaufschlagt, um sie zusammenzuziehen. Der Vorteil dieser Ausführungsform liegt darin, dass eine Vakuumquelle verwendet wird, die beispielsweise auch zum Halten des Substrats auf der drehbaren Auflage verwendet werden kann. Ein zusätzliches Element zum Anlegen eines positiven Drucks kann vermieden werden.

Gemäß einer besonders bevorzugten Ausführungsform der Erfindung ist das Element drehfest mit einer drehbaren Substratauflage verbunden, um eine synchrone Drehung des Elements und der Substratauflage, sowie der Substrate zu erreichen.

Die Erfindung ist insbesondere für die Herstellung von optischen Datenträgern, wie beispielsweise CD's, DVD's, DVR's etc. geeignet.

Die Erfindung wird nachfolgend anhand bevorzugter Ausführungsbeispiele unter Bezugnahme auf die Zeichnungen erläutert; in den Zeichnungen zeigt:
- Fig. 1: eine schematische Schnittansicht einer erfindungsgemäßen Vorrichtung in einer Aufnahmeposition;
- Fig. 2: eine schematische Schnittansicht der Vorrichtung gemäß Fig. 1 in einer Halteposition;
- Fig. 3: eine schematische Schnittansicht einer Vorrichtung der vorliegenden Erfindung gemäß einem zweiten Ausführungsbeispiel;
- Fig. 4: eine schematische Schnittansicht einer Vorrichtung der vorliegenden Erfindung gemäß einem dritten Ausführungsbeispiel;
- Fig. 5: eine schematische Schnittansicht einer Vorrichtung der vorliegenden Erfindung gemäß einem vierten Ausführungsbeispiel.

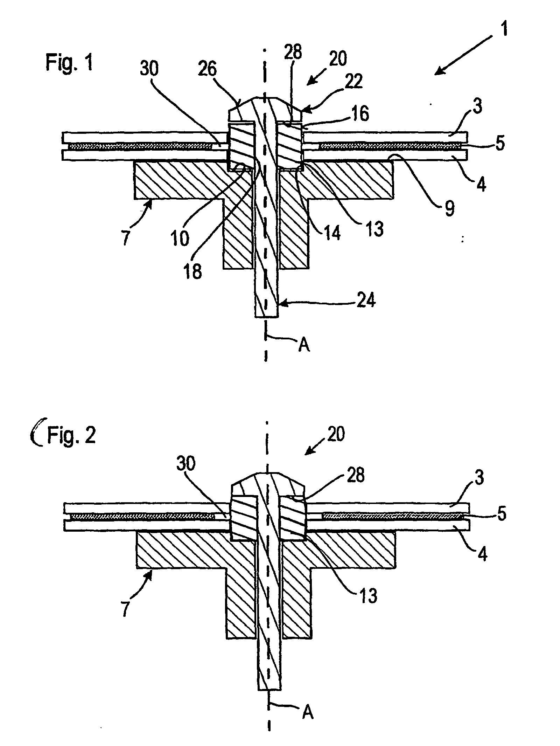

Fig. 1 zeigt eine schematische Schnittansicht einer Vorrichtung 1 zum Zusammenfügen von Substraten 3, 4, die jeweils ein Innenloch aufweisen. In der Fig. ist zwischen den Substraten 3, 4 eine Kleberschicht 5 dargestellt, die wie nachfolgend noch näher beschrieben wird, durch Rotation der Substrate 3, 4 gleichmäßig dazwischen verteilt wird.

Die Vorrichtung 1 weist eine Auflage 7 auf, die über einen nicht näher dargestellten Antriebsmechanismus um die Achse A drehbar ist. Die Auflage 7 weist eine Auflagefläche 9 auf, auf der das Substrat 4 aufliegt. Obwohl die Auflage 7 in Fig. 1 so dargestellt ist, dass sie kleinere Umfangsabmessungen als das Substrat 4 aufweist, kann die Auflage 7 auch die gleichen oder größere Umfangsabmessungen wie das Substrat 4 aufweisen, sodass das Substrat 4 vollständig auf der Auflagefläche 9 aufliegt. Die Auflagefläche 9 kann Vakuumöffnungen zum Ansaugen des Substrats 4 aufweisen, um das Substrat fest an der Auflage 7 zu halten. Alternativ kann die Auflage 7 auch als Ringelement mit einem Vakuumring ausgebildet sein, auf dem das Substrat 4 aufliegt und festgehalten wird.

In der Auflagefläche 9 ist eine Vertiefung 10 ausgebildet, die eine dem Innenloch der Substrate 3, 4 entsprechende Umfangsform aufweist. In der Vertiefung 10 ist ein elastisches Element 13 aufgenommen und durch eine Schulter 14 der Vertiefung 10 radial geführt.

Das elastische Element 13 weist eine Umfangsfläche 16 auf, deren Umfangsform der Form des Innenlochs der Substrate 3, 4 entspricht. Das elastische Element 13 weist eine Mittelöffnung 18 auf, die zur Drehachse A der Auflage 7 zentriert ist.

Die Vorrichtung 1 weist ferner einen Zentrierstift 20 mit einem Kopfteil 22 und einem Schaftteil 24 auf. Der Schaftteil 24 erstreckt sich durch die Mittelöffnung 18 des elastischen Elements 13 und ist drehbar mit der Auflage 7 gekoppelt, wie beispielsweise mit einer Keil-Nut-Verbindung, um gemeinsam mit der Auflage 7 um die Achse A gedreht zu werden. Der Zentrierstift 20 ist bezüglich der Auflage 7 in Richtung der Drehachse A verschiebbar gehalten.

Der Kopf 22 des Zentrierstifts 20 ist auf der der Auflage 7 gegenüberliegenden Seite des elastischen Elements 13 angeordnet, sodass das elastische Element 13 zwischen der Auflage 7 und dem Kopf 22 aufgenommen ist. Der Kopf 22 des Zentrierstifts 20 weist eine von der Auflage 7 wegweisende Zentrierschräge 26, sowie eine zu der Auflage 7 weisende und sich im Wesentlichen parallel zur Auflagefläche 9 erstreckende Druckfläche 28 auf, die wie nachfolgend beschrieben wird, zum Zusammendrücken des elastische Elements 13 verwendet wird.

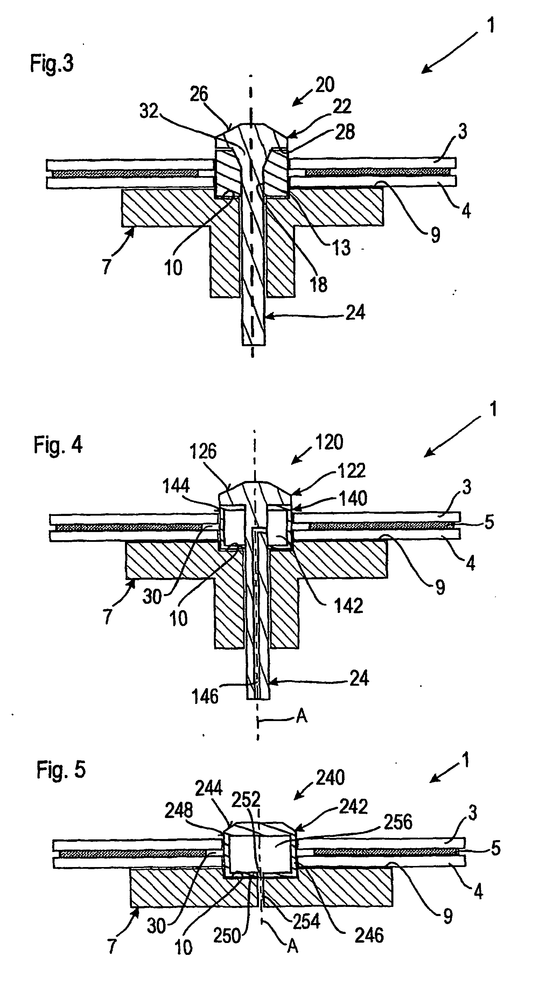

Die Funktion der Vorrichtung 1 wird nun anhand der Fig. 1 und 2 näher erläutert.
Zum Be- und Entladen der Vorrichtung 1 sind die Auflage 7 und der Zentrierstift 20 in Richtung der Drehachse A so zueinander positioniert, dass das elastische Element 13 zwischen dem Kopf 22 des Zentrierstifts 20 und der Auflage 7 nicht zusammengedrückt ist, wie in Fig. 1 dargestellt ist. Wie in Fig. 1 zu erkennen ist, ist die Druckfläche 28 des Kopfs 22 des Zentrierstifts 20 leicht von dem elastischen Element 13 beabstandet. In dieser Stellung wird zunächst das Substrat 14 auf der Auflage 7 abgelegt, wobei das Substrat 4 durch die Zentrierschräge 26 des Zentrierstifts 20 bezüglich des Zentrierstifts 20 und der Drehachse A zentriert wird. Nun wird ein Kleber 5 auf das Substrat 4 aufgebracht. Anschließend wird das Substrat 3 auf dem Substrat 4 abgelegt. sodass im Wesentlichen der in Fig. 1 gezeigte Zustand erreicht wird.

Statt den Kleber 5 nach dem Ablegen auf der Auflage 7 auf das Substrat 4 aufzubringen, kann der Kleber natürlich auch schon vorher auf das Substrat 4 oder auf das Substrat 3 aufgebracht worden sein. Der Kleber 5 wird derart aufgebracht, dass er von den Innenlöchern der Substrate 3, 4 beabstandet ist. Hierdurch wird im Bereich der Innenlöcher der Substrate 3, 4 ein freier Raum 30 gebildet, wenn die Substrate 3, 4, wie in Fig. 1 gezeigt, aufeinander liegen.

Nun wird der Zentrierstift 20 in Richtung der Drehachse A zu der Auflage 7 hin bewegt. Die Druckfläche 28 des Kopfs 22 des Zentrierstifts 20 kommt mit dem elastischen Element 13 in Kontakt und drückt es fest gegen die Auflage 7. Bei einer weiteren Bewegung des Zentrierstifts 20 wird das elastische Element 13 zwischen den Kopf 22 des Zentrierstifts 20 und der Auflage 7 zusammengedrückt und weitet sich dadurch radial aus. Die Umfangsfläche 16 des elastischen Elements 13 schmiegt sich fest an die Innenlöcher der Substrate 3, 4 an und dichtet dabei den Raum 30 zwischen Substraten 3, 4 zur Umgebung hin ab. Nun wird die Auflage 7 über den nicht näher dargestellten Antrieb um die Drehachse A gedreht. Da der Zentrierstift 20 drehbar mit der Auflage 7 gekoppelt ist, wird auch der Zentrierstift 20 um die Achse A gedreht. Da das elastische Element 13 zwischen dem Zentrierstift 20 und der Auflage 7 festgeklemmt ist, wird auch das elastische Element 13 um die Drehachse A gedreht. Da sich die Umfangsfläche 16 des elastischen Elements 13 an die Innenlöcher der Substrate 3, 4 angeschmiegt hat, wird die Drehbewegung auch auf die Substrate 3, 4 übertragen. Natürlich wird die Drehbewegung der Auflage 7 auch über die Auflagefläche 9 direkt auf das Substrat 4 übertragen.

Durch die Drehung wird der Kleber 5 gleichmäßig zwischen den Substraten 3, 4 verteilt. Da der Raum 30 durch das elastische Element 13 zur Umgebung hin abgedichtet ist, wird ein Lufteintritt zwischen die Substrate 3, 4 über die Innenlöcher der Substrate verhindert. Hierdurch werden Ausschleudereffekte des Klebers 5 verhindert und ferner wird eine Blasenbildung durch einen Lufteintritt in den Raum 30 verhindert.

Zum Entnehmen der zu einer Substratscheibe verklebten Substrate 3, 4 wird der Zentrierstift wieder in die in Fig. 1 gezeigte Position bewegt. Aufgrund der Elastizität des Elements 13 bewegt es sich auch in die in Fig. 1 gezeigt Position, so dass die Substratscheibe nun frei auf der Auflagefläche 9 aufliegt und entnommen werden kann.

Fig. 3 zeigt eine alternative Ausführungsform einer Vorrichtung 1 zum Zusammenfügen von Substraten 3, 4. Bei dem in Fig. 3 dargestellten Ausführungsbeispiel werden dieselben Bezugszeichen verwendet, sofern dieselben oder ähnliche Elemente bezeichnet werden.

Die Vorrichtung 1 gemäß Fig. 3 gleicht im Wesentlichen der Vorrichtung 1 gemäß den Fig. 1 und 2. Die Vorrichtung 1 weist eine Auflage 7 mit einer Auflagefläche 9 und einer Vertiefung 10 auf. In der Vertiefung 10 ist ein elastisches Element 13 aufgenommen. Das elastische Element 13 weist eine Mittelöffnung 18 auf, durch die sich ein Schaftteil 24 eines Zentrierstifts 20 erstreckt. Der Zentrierstift 20 ist drehbar mit der Auflage 7 gekoppelt. Der Zentrierstift 20 weist eine von der Auflagefläche 9 wegweisende Zentrierschräge 26 sowie eine zur Auflagefläche 9 weisende und sich im Wesentlichen parallel hierzu erstreckende Druckfläche 28 auf. Der Schaftteil 24 besitzt benachbart zum Kopf 22 des Zentrierstifts 20 einen sich konisch erweiternden Abschnitt 32 auf, der in dem Innenloch 18 des elastischen Elements 13 aufgenommen ist.

Bei einer in Richtung der Auflage 7 gerichteten Bewegung des Zentrierstifts 20 bewirkt der sich konisch erweiternde Abschnitt 32 eine besonders gute Aufweitung des elastischen Elements 13.

Die Funktion der Vorrichtung 1 gemäß Fig. 3 entspricht im Wesentlichen der Funktion der Vorrichtung gemäß den Fig. 1 und 2 und wird daher nicht nochmals erläutert.

Fig. 4 zeigt eine weitere Ausführungsform der vorliegenden Erfindung. Bei der Ausführungsform gemäß Fig. 4 werden dieselben Bezugszeichen wie in den Fig. 1 und 2 verwendet, sofern ähnliche oder identische Bauteile bezeichnet werden.

Fig. 4 zeigt eine Vorrichtung 1 zum Zusammenfügen von Substraten 3, 4 , die über einen zwischen den Substraten 3, 4 befindlichen Kleber 5 miteinander verklebt werden. Die Vorrichtung 1 weist eine Auflage 7 mit einer Auflagefläche 9 auf, auf der ein Substrat 4 aufliegen kann. Die Auflage 7 weist eine Vertiefung 10 in der Auflagefläche 9 auf. Die Auflage 7 ist mit einer nicht näher dargestellten Antriebsvorrichtung gekoppelt, um die Auflage 7 um eine Drehachse A zu drehen. Die Vorrichtung 1 weist ferner einen Zentrierstift 120 mit einem Kopfteil 122 und einem Schaftteil 124 auf. Der Kopfteil 122 weist eine von der Auflage 7 wegweisende Zentrierschräge 126 auf.

Der Schaftteil 124 des Zentrierstifts 120 erstreckt sich durch die Auflage 7 und ist drehbar mit dieser gekoppelt, sodass er sich mit der Auflage 7 dreht, wenn diese um die Drehachse A gedreht wird. Der Zentrierstift ist bezüglich der Drehachse A zentriert.

An der Unterseite des Kopfteils 122 des Zentrierstifts 120 ist ein elastisches Kammerelement 140 vorgesehen, das um einen Teil des Schafts 124 herum eine abgedichtete Ringkammer 142 bildet. Das Kammerelement 140 weist eine elastische Umfangswand 144 auf, dessen Umfangsform im Wesentlichen der Umfangsform des Innenlochs der Substrate 3, 4 entspricht. Das Kammerelement 140 ist in geeigneter Weise an dem Zentrierstift 120 angebracht, und ist beispielsweise an dem Kopfteil 122 sowie dem Schaftteil 124 angeschweißt, um die abgedichtete Kammer 142 zu bilden. Hierdurch ist das Kammerelement 140 auch drehfest mit dem Zentrierstift 120 verbunden.

Der Schaftteil 124 des Zentrierstifts 120 weist eine Leitung 146 auf, die sich in die abgedichtete Kammer 142 öffnet. Die Leitung 146 steht mit einer nicht näher dargestellten Pumpe in Verbindung, über die die abgedichtete Kammer 142 mit einem Fluid, wie beispielsweise Luft beaufschlagt werden kann, was zu einer elastischen Ausdehnung des Kammerelements 140 führt.

Nachfolgend wird die Funktion der Vorrichtung 1 gemäß Fig. näher erläutert.

Zu Beginn befindet sich die abgedichtete Kammer 142 auf Umgebungsdruck und damit befindet sich das Kammerelement 140 in der in Fig. 4 gezeigten Stellung. Die Substrate 3, 4 werden in der schon oben beschriebenen Art und Weise in die in Fig. 4 dargestellte Position gebracht. Nun wird die abgedichtete Kammer 142 mit Druckluft beaufschlagt, sodass sich das Kammerelement 140 radial ausdehnt. Die Umfangswand 144 schmiegt sich fest an den Innenumfang der Innenlöcher der Substrate 3, 4 an und dichtet einen zwischen den Substraten gebildeten Raum 30 ab. Nun wird die Auflage 7 um die Drehachse A gedreht, wodurch auch der Zentrierstift 20 und das Kammerelement 140 um die Drehachse A gedreht werden. Durch den engen Kontakt zwischen der Umfangswand 144 des Kammerelements 140 und dem Innenumfang der Innenlöcher der Substrate 3, 4 werden auch die Substrate 3, 4 um die Drehachse A gedreht. Die Drehbewegung der Auflage 7 wird natürlich auch über die Auflagefläche 9 auf das Substrat 4 und über den Kleber 5 auf das Substrat 3 übertragen. Der Kleber 5 verteilt sich gleichmäßig zwischen den Substraten 3, 4, die auf diese Weise miteinander verklebt werden.

Nach dem Verkleben wird die Kammer 142 entlüftet, sodass sich die Umfangswand 144 wieder von den Innenlöchern der Substrate 3, 4 wegbewegt, sodass die verklebten Substrate zur Entnahme freigegeben sind.

Bei dem unter Bezugnahme auf Fig. 4 beschriebenen Ausführungsbeispiel wurde die Kammer 142 mit einem Druckfluid beaufschlagt, um die Umfangswand 144 radial auszuweiten. Alternativ wäre es aber auch möglich, dass das Kammerelement 140 eine Umfangswand 144 aufweist, die, wenn die Kammer 142 auf Umgebungsdruck ist, fest gegen den Innenumfang der Innenlöcher der Substrate drückt. Um ein Be- und Entladen der Substrate 3, 4 zu ermöglichen, wird die Kammer 142 mit einem Unterdruck beaufschlagt, um die Kammer zusammenzuziehen. Zum Anlegen des Unterdrucks kann beispielsweise eine Vakuumpumpe verwendet werden, die auch mit Vakuumöffnungen in der Auflagefläche 9 in Verbindung steht.

Fig. 5 zeigt eine weitere alternative Ausführungsform der Erfindung. In Fig. 5 werden dieselben Bezugszeichen wie in Fig. 1 verwendet, sofern ähnliche oder identische Elemente bezeichnet werden.

Fig. 5 zeigt eine Vorrichtung 1 zum Zusammenfügen von Substraten 3, 4, die mit einem dazwischen befindlichen Kleber 5 verklebt werden.

Die Vorrichtung 1 weist eine Auflage 7 auf, die in geeigneter Weise mit einem nicht näher dargestellten Antrieb verbunden ist, um die Auflage 7 um eine Drehachse A zu drehen. Die Auflage 7 weist eine Auflagefläche 9 auf, in der ein Vertiefung 10 ausgebildet ist.

In der Vertiefung 10 ist ein elastisches Kammerelement 240 angeordnet, dass in geeigneter Weise drehfest mit der Auflage 7 verbunden ist. Das elastische Kammerelement 240 weist ein starres Oberteil 242 mit einer Zentrierschräge 244 auf. Das Kammerelement 240 weist eine elastisch aufweitbare Umfangswand 246 mit einer Umfangsfläche 248 auf. Die Form der Umfangsfläche 248 entspricht im Wesentlichen der Form der Innenlöcher der Substrate 3, 4. Eine Bodenwand 250 des Kammerelements 240 weist eine Öffnung 252 auf, die mit einer Leitung 254 in der Auflage 7 in Verbindung steht. Die Leitung 254 steht mit einer Pumpe in Verbindung, um eine Kammer 256 des Kammerelements 240 mit einem Druckfluid zu beaufschlagen.

Nachfolgend wird nun die Funktion der Vorrichtung 1 gemäß Fig. 5 erläutert. Die Kammer 256 befindet sich auf Umgebungsdruck, sodass sich das Kammerelement 240 in der in Fig. 5 gezeigten Position befindet. Die Substrate 3, 4 werden in der schon oben beschriebenen Art und Weise beladen, wobei die Zentrierschräge 244 des Kammerelements 240 zur Zentrierung der Substrate 3, 4 dient. Sobald die Substrate beladen sind, wird die Kammer 256 mit einem Druckfluid, wie beispielsweise Luft, beaufschlagt, sodass sich die Umfangswand 246 radial nach außen ausdehnt. Die Umfangsfläche 248 der Wand 246 schmiegt sich fest an die Umfangsfläche der Innenlöcher der Substrate 3, 4 an und dichtet einen zwischen den Substraten 3, 4 gebildeten Raum 30 ab. Nun wird die Auflage 7 um die Drehachse A gedreht, wodurch auch das drehfest mit der Auflage 7 verbundene Kammerelement 240 gedreht wird. Die Drehbewegung wird über das Kammerelement 240 auch auf die Substrate 3, 4 übertragen, sodass sich der dazwischen befindliche Kleber 5 gleichmäßig verteilt und die Substrate 3, 4 miteinander verklebt werden. Nach dem Verkleben der Substrate 3, 4 wird das Druckfluid aus der Kammer 256 abgelassen, sodass sich die Umfangswand 246 wieder in die Fig. 5 gezeigte Position zurückbewegt. Die Substrate 3, 4 können nun als eine Substratscheibe entnommen werden.

Um eine radiale Aufweitung der Umfangswand 246 sicherzustellen, können im Inneren der Kammer 256 Stege oder Fangbänder vorgesehen sein, die das starre Oberteil 242 mit der Auflage 7 verbinden und eine Bewegung des starren Oberteils 242 relativ zur Auflage 7 verhindern. Das Kammerelement 240 kann auch durch Anlegen eines Unterdrucks in die in Fig. 5 gezeigte Position gebracht werden und durch Belüften radial aufgeweitet werden, wie oben unter Bezugnahme auf das Ausführungsbeispiel gemäß Fig. 4 beschrieben wurde.

Die Erfindung wurde zuvor anhand bevorzugter Ausführungsbeispiele der Erfindung beschrieben, ohne jedoch auf die konkret ausgeführten Ausführungsbeispiele beschränkt zu sein. Beispielsweise könnte das elastische Element gemäß der Fig. 1 bis 3 in geeigneter Weise drehfest mit der Auflage und/oder dem Zentrierstift gekoppelt sein. Statt einen Zentrierstift vorzusehen, der sich durch das elastische Element hindurch erstreckt, könnte auch ein separates Element vorgesehen sein, das gegen eine von der Auflage wegweisende Fläche des elastischen Elements drückt, um es zusammenzudrücken und radial aufzuweiten. Ein solches Element müsste nicht drehbar mit der Auflage gekoppelt sein. Die unter Bezugnahme auf ein Ausführungsbeispiel beschriebenen Elemente können auch in den anderen Ausführungsbeispielen verwendet werden, sofern eine Kompatibilität gegeben ist.

## Patentansprüche

1. Vorrichtung (1) zum Zusammenfügen von ein Innenloch aufweisenden Substraten (3, 4) zu einer Substratscheibe mit einem aufweitbaren Element (13, 140), das in das Innenloch von wenigstens zwei übereinander liegenden Substraten (3, 4) einführbaren ist, wobei das Element (13, 140) derart aufweitbar ist, dass es in Kontakt mit den Innenlöchern beider Substrate kommt und einen zwischen den Substraten (13, 140) gebildeten Zwischenraum (30) zur Umgebung hin abschließt, mit einer Substratauflage (7), die um eine Drehachse (A) senkrecht zur Auflagefläche drehbar ist, und mit einem Zentrierstift (20), der drehbar mit der Auflage (7) gekoppelt ist und in Richtung der Drehachse (A) relativ zur Auflage (7) bewegbar ist, wobei das Element (13, 140) zwischen der Substratauflage (7) und dem Zentrierstift (20) angeordnet und dazwischen zusammendrückbar ist.

2. Vorrichtung nach Anspruch 1, **dadurch gekennzeichnet, dass** das Element (13, 140) aus einem elastischen Material besteht.

3. Vorrichtung nach Anspruch 1 oder 2, **dadurch gekennzeichnet, dass** das Element (13, 140) durch Druckausübung aufweitbar ist.

4. Vorrichtung nach einem der vorhergehenden Ansprüche, **dadurch gekennzeichnet, dass** das Element (13, 140) ein elastischer Ring ist.

5. Vorrichtung nach Anspruch 4, **dadurch gekennzeichnet, dass** wenigstens einer der Teile (7; 13, 140; 20) einen sich konisch erweiternden Abschnitt (32) aufweist, der zur Aufweitung des Rings in ein Mittelloch desselben einführbar ist.

6. Vorrichtung nach Anspruch 4 oder 5, **dadurch gekennzeichnet, dass** sich der Zentrierstift (20) durch ein Mittelloch des Rings erstreckt.

7. Vorrichtung nach einem der vorhergehenden Ansprüche, **dadurch gekennzeichnet, dass** das Element (13) eine elastische, mit Druck beaufschlagbare Kammer (142) aufweist.

8. Vorrichtung nach Anspruch 7, **dadurch gekennzeichnet, dass** die Kammerwand (144) einen kleineren Außenumfang als der Innenumfang des Innenlochs der Substrate (3, 4) aufweist, wenn der Kammerdruck auf Umgebungsdruck liegt.

9. Vorrichtung nach Anspruch 7, **dadurch gekennzeichnet, dass** die Kammerwand (144) einen größeren Außenumfang als der Innenumfang des Innenlochs der Substrate (3, 4) aufweist, wenn der Kammerdruck auf Umgebungsdruck liegt.

10. Vorrichtung nach einem der vorhergehenden Ansprüche, **dadurch gekennzeichnet, dass** das Element (13, 140) drehfest mit einer drehbaren Substratauflage verbunden ist.

## Claims

1. Device (1) for joining together substrates (3, 4), which have an inner hole, to form a substrate disc, comprising an expansible element (13, 140) introducible into the inner hole of at least two substrates (3, 4) lying one above the other, wherein the element (13, 140) can be expanded in such a manner that it comes into contact with the substrates having inner holes and closes off an intermediate space (30), which is formed between the substrates (13, 140), relative to the environment, a substrate (7) rotatable about an axis (A) of rotation perpendicular to the support surface, and a centring pin (20) rotatably coupled with the support (7) and movable relative to the support (7) in the direction of the axis (A) of rotation, wherein the element (13, 140) is arranged between the substrate support (7) and the centring pin (20) and can be compressed therebetween.

2. Device according to claim 1, **characterised in that** the element (13, 140) consists of a resilient material.

3. Device according to claim 1 or 2, **characterised in that** the element (13, 140) can be expanded by exertion of pressure.

4. Device according to one of the preceding claims, **characterised in that** the element (13, 140) is a resilient ring.

5. Device according to claim 4, **characterised in that** at least one of the parts (7; 13, 140; 20) has a conically expansible portion (32) which for expansion of the ring can be introduced into a centre hole of the same.

6. Device according to claim 4 or 5, **characterised in that** the centring pin (20) extends through a centre hole of the ring.

7. Device according to one of the preceding claims, **characterised in that** the element (13) has a resilient chamber (142) able to be loaded with pressure.

8. Device according to claim 7, **characterised in that** the chamber wall (144) has a smaller outer circumference than the inner circumference of the inner hole of the substrates (3, 4) when the chamber pressure lies at ambient pressure.

9. Device according to claim 7, **characterised in that** the chamber wall (144) has a larger outer circumference than the inner circumference of the inner hole of the substrates (3, 4) when the chamber pressure lies at ambient pressure.

10. Device according to one of the preceding claims, **characterised in that** the element (13, 140) is connected with a rotatable substrate support to be secure against relative rotation.

## Revendications

1. Dispositif (1) d'assemblage de substrats (3, 4) présentant un trou intérieur en un disque de substrat avec un élément (13, 140) apte à être élargi insérable dans le trou intérieur d'au moins deux substrats (3, 4) situés l'un au-dessus de l'autre, où l'élément (13, 140) peut être élargi de façon à venir en contact avec les trous intérieurs des deux substrats et ferme vers l'environnement un espace intermédiaire (30) formé entre les substrats (13, 140), avec un support de substrat (7) apte à tourner autour d'un axe de rotation (A) perpendiculairement à la face de support, et avec une broche de centrage (20), qui est couplée d'une manière tournante au support (7) et est déplaçable dans la direction de l'axe de rotation (A) relativement au support (7), où l'élément (13, 140) est disposé entre le support de substrat (7) et la broche de centrage (20) et peut être comprimé entre ceux-ci.

2. Dispositif selon la revendication 1, **caractérisé en ce que** l'élément (13, 140) est constitué d'un matériau élastique.

3. Dispositif selon la revendication 1 ou 2, **caractérisé en ce que** l'élément (13, 140) peut être élargi en exerçant une pression.

4. Dispositif selon l'une des revendications précédentes, **caractérisé en ce que** l'élément (13, 140) est une bague élastique.

5. Dispositif selon la revendication 4, **caractérisé en ce qu'**au moins l'une des parties (7; 13, 140; 20) présente une section (32) s'élargissant de manière conique qui, pour élargir la bague, est insérable dans un trou médian de celle-ci.

6. Dispositif selon la revendication 4 ou 5, **caractérisé en ce que** la broche de centrage (20) s'étend à travers un trou médian de la bague.

7. Dispositif selon l'une des revendications précédentes, **caractérisé en ce que** l'élément (13) présente une chambre élastique (142) pouvant être chargée en pression.

8. Dispositif selon la revendication 7, **caractérisé en ce que** la paroi de chambre (144) présente un plus petit pourtour extérieur que le pourtour intérieur du trou intérieur des substrats (3, 4) lorsque la pression de la chambre se situe à la pression environnante.

9. Dispositif selon la revendication 7, **caractérisé en ce que** la paroi de chambre (144) présente un pourtour extérieur plus grand que le pourtour intérieur du trou intérieur des substrats (3, 4) lorsque la pression de chambre se situe à la pression environnante.

10. Dispositif selon l'une des revendications précédentes, **caractérisé en ce que** l'élément (13, 140) est relié d'une manière non tournante à un support de substrat tournant.
